# EUROPEAN PATENT APPLICATION

(11) **EP 1 933 511 A1**
(43) Date of publication of application: **18.06.2008**
(21) Application number: 06810532.9
(22) Date of filing: 26.09.2006
(51) Int. Cl.: H04L 12/66, G06F 13/00, H04M 3/00

(54) **PROTOCOL CONVERSION SYSTEM IN MEDIA COMMUNICATIONS BETWEEN PACKET EXCHANGING NETWORK AND LINE EXCHANGING NETWORK**

(30) Priority: 06.10.2005 JP 2005294001
(71) Applicant: NEC Corporation, Minato-ku Tokyo 108-8001 (JP)
(72) Inventor: DEI, Hiroaki, Tokyo 1088001 (JP); OZAWA, Kazunori, Tokyo 1088001 (JP); KOYAMA, Kazuhiro, Tokyo 1088001 (JP); NAKAZAWA, Tatsuya, Tokyo 1088001 (JP)
(74) Representative: Glawe, Ulrich
(86) International application number: PCT/JP2006/319007
(87) International publication number: WO 2007/040085

(57) **Abstract**

In media communication by way of a packet-switching network and a circuit-switching network, a protocol conversion device for converting protocols between the packet-switching network and the circuit-switching network includes a call connection unit and a protocol converter. The call connection unit carries out call connection processes of media communication between terminals of the packet-switching network side and terminals of the circuit-switching network side. The protocol converter analyzes packets of speech received from the packet-switching network to specify the encoding bit rate of speech data in the speech packets. The protocol converter then specifies the multiplex table used in multiplexing frames on the circuit-switching network from the encoding bit rate. The protocol converter further generates frames by using the multiplex table that was specified to multiplex data in the payload of packets received from the packet-switching network and transmits to the circuit-switching network.

## Description

### Technical Field

The present invention relates to a technique for, when carrying out media communication of speech and images between a terminal connected to a circuit-switching network and a terminal connected to a packet-switching network, converting transmission protocols to relay media in a device that is provided between the two networks.

### Background Art

Recent years have seen the rapid popularization of bidirectional communication systems or conference systems referred to as VoIP (Voice over IP) or TVoIP (TV over IP) for communicating encoded data of speech or images by packets by way of networks. Terminals that are coming into wide use include not only this type of communication system connected to a packet-switching network, but also, among third-generation portable terminals (3G terminals), terminals capable of inter-terminal TV telephone on circuit-switching networks.

These terminals are of specifications in which the encoding methods for exchanging speech and images, the transmission protocol for transmitting and receiving encoded data, and call connection protocol for mutually call connection are matched to the respective networks. For example, if the encoding methods are the same but the transmission protocols are different, the terminals are not able to communicate with each other, and as a result, realizing communication between terminals that are connected to different networks requires a device connected between the two networks for relaying the exchange of encoded data.

In this case, for example, it is assumed that the transmission protocol that is supported by terminals (SIP terminals) connected to a packet-switching network is RTP (Real-Time Transport Protocol)/UDP (User Datagram Protocol)/IP (Internet Protocol) and the call connection protocol for carrying out the capacity exchange of terminals is SIP (Session Initiation Protocol)/SDP (Session Description Protocol). A terminal connected to a circuit-switching network supports ITU-T H. 324 recommendations (3G-324 and Q. 931 for Third-Generation portable terminals) and follows ITU-T H. 223 recommendations (hereinbelow referred to as H. 223) as the transmission protocol and ITU-T H. 245 recommendations (hereinbelow referred to as H. 245) as the capacity exchange protocol. In this case, mutual conversion between RTP/UDP/IP and H. 223 and mutual conversion between SIP and H. 245 are required in a device interposed between a packet-switching network and circuit-switching network. These issues are described below in the following four documents:
Document 1: Handley, M., Schulzrinne, H., Schooler, E., Rosenberg, J., "SIP: Session Initiation Protocol," RFC 2543, March 1999.
Document 2: Handley, M., Jacobson, V., "SDP: Session Description Protocol," RFC 2327, April 1998.
Document 3: Schulzrinne, H., Casner, S., Frederick, R., Jacobson, V., "RTP: A Transport Protocol for Real-Time Applications," RFC 3550, July 2003. Document 4: Sjoberg, J., Westerlund, M., Lakaniemi, A., Xie, Q., "Real-Time Transport Protocol (RTP) Payload Format and File Storage Format for the Adaptive Multi-Rate (AMR) and the Adaptive Multi-Rate Wideband (AMR-WB) Audio Codecs," RFC 3237, June 2002.

A connection system (gateway) has been proposed that is applied only to one type of encoding bit rate for realizing this communication between an SIP terminal connected to a packet-switching network and a 3G terminal. According to this connection device, a terminal connected to a packet-switching network and a terminal connected to a circuit-switching network can communicate without awareness of each other's transmission protocol and call connection protocol. In addition, a multimedia communication system has also been proposed that adopts a method of changing multiplex tables to correspond to changes in bit rate (JP-A-2003-198638 and JP-A-2002-111730)

### Disclosure of the Invention

However, in the transmission protocol conversion device of the above-described connection system, the specifications of the encoded data and the specifications of the transmission protocol are independent from each other, and this complicates protocol conversion adapted to the specifications of the encoded data. For example, even when specifications permitted changes in the bit rate of encoded data of speech or images during communication, problems were encountered in changing the conversion of transmission process in conjunction with fluctuation in bit rate. As a result, during communication, the relay of data was carried out with a fixed encoding bit rate. When it was necessary to change the speech encoding rate during communication in the multimedia communication system described in JP-A-2002-111730, an exchange regarding changes of multiplex tables relating to the rate change was carried out each time between terminals. After completion of the exchange of multiplex table changes, data relay was implemented with the encoding bit rate basically fixed.

In addition, when the bit rate of the encoded data that is supported by an SIP terminal connected to a packet-switching network differs from the bit rate of encoded data that is supported by a 3G terminal connected to a circuit-switching network, bit rate conversion was required in the connection system. In this case, however, in order to enable coping with the above-described transmission protocol conversion process, it was necessary for each terminal to adopt a respective fixed bit rate and then implement bit rate conversion between the terminals. As a result, conversion of bit rate during communication was problematic.

It is an object of the present invention to provide, in a system in which the transmission protocols of a packet-switching network and circuit-switching network are mutually converted, a system that can flexibly cope with a plurality of encoding bit rates.

To achieve the above-described object, the present invention is a protocol conversion device for, in media communication by way of a packet-switching network and circuit-switching network, converting protocols between the packet-switching network and the circuit-switching network, the protocol conversion device including a call connection unit a protocol converter.

The call connection unit carries out call connection processes of media communication between a terminal on the packet-switching network side and a terminal on the circuit-switching network side. The protocol converter analyzes speech packets received from the packet-switching network and specifies the encoding bit rate of the speech data in these speech packets. The protocol converter then specifies the multiplex table used in multiplexing of frames on the circuit-switching network from this encoding bit rate. The protocol converter further uses the specified multiplex table to multiplex data in the payload of packets received from the packet-switching network and thus generates frames and transmits to the circuit-switching network.

### Brief Description of the Drawings

FIG. 1 is a block diagram showing configuration of a communication system according to the first to fourth embodiments of the present invention;
FIG. 2 is a view for explaining the multiplex table in the first to fifth embodiments;
FIG. 3 shows the flow of processing when transmitting media from a circuit-switching network to a packet-switching network in the first to fifth embodiments;
FIG. 4 is a view for explaining the flow for generating speech RTP packets from H. 223 multiplexed frames in the first and second embodiments;
FIG. 5 is a view for explaining an example of using a speech transcoder when generating speech RTP packets from H. 223 multiplexed frames in the first and second embodiments;
FIG. 6 shows the flow of processing when transmitting media from a packet-switching network to a circuit-switching network in the first to fourth embodiments;
FIG. 7 is a view for explaining the flow for generating H. 223 multiplexed frames from RTP (speech) packets in the first and second embodiments;
FIG. 8 is a view for explaining an example of using a speech transcoder when generating H. 223 multiplexed frames from RTP (speech) packets in the first and second embodiments;
FIG. 9 is a view for explaining the flow when generating speech RTP packets from H. 223 multiplexed frames in the third and fourth embodiments;
FIG. 10 is a view for explaining an example of using a speech transcoder when generating speech RTP packets from H. 223 multiplexed frames in the third and fourth embodiments;
FIG. 11 is a view for explaining the flow when generating H. 223 multiplexed frames from RTP (speech) packets in the third and fourth embodiments;
FIG. 12 is a view for explaining an example of using a speech transcoder when generating H. 223 multiplexed frames from RTP (speech) packets in the third and fourth embodiments;
FIG. 13 is a block diagram showing the configuration of a connection gateway realized by the fifth embodiment;
FIG. 14 is a view for explaining the processing flow in the fifth embodiment; and
FIG. 15 is a view for explaining another processing flow in the fifth embodiment.

### Best Mode for Carrying Out the Invention

Explanation next regards embodiments of the present invention with reference to the accompanying figures.

### First Embodiment

A connection gateway for implementing protocol conversion is arranged between a circuit-switching network and a packet-switching network. The connection gateway, upon receiving speech encoded data and image encoded data from the packet-switching network, determines the encoding bit rate from the payload length of speech packets and converts the bit rate of the speech encoded data if necessary. The connection gateway is provided with a plurality of multiplex tables in advance, selects a multiplex table in accordance with the speech bit rate following conversion, and uses this multiplex table to multiplex the speech encoded data and image encoded data to transmit to the circuit-switching network.

In addition, upon receiving multiplexed data from the circuit-switching network, the connection gateway separates the multiplexed data into speech encoded data and image encoded data in accordance with the multiplex table information. Regarding the speech encoded data, the connection gateway then, if determined to be necessary from the encoded data length, converts the bit rate of the speech encoded data. The connection gateway then packetizes each of the speech encoded data and image encoded data and transmits to the packet-switching network.

A detailed explanation follows below with reference to the drawings.

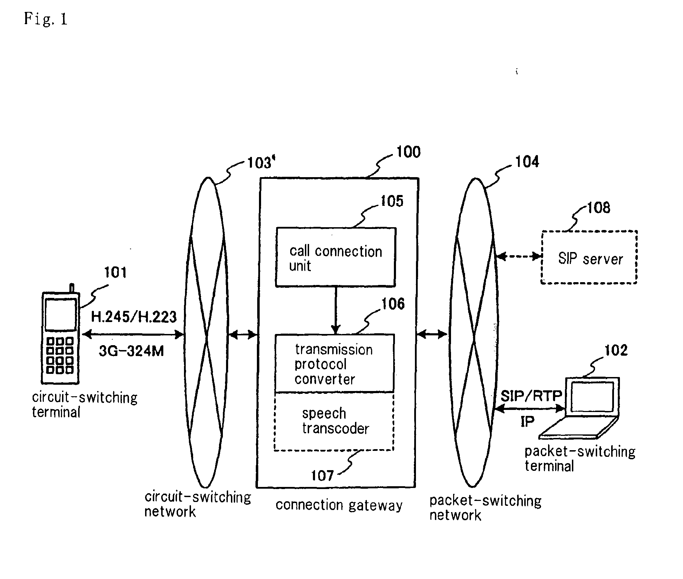

FIG. 1 is a block diagram showing the configuration of the communication system according to the first embodiment. As shown in FIG. 1, the communication system of the present embodiment is made up from connection gateway 100, circuit-switching terminal 101, packet-switching terminal 102, circuit-switching network 103, packet-switching network 104, and SIP server 108. Connection gateway 100 is made up from call connection unit 105, transmission protocol converter106, and speech transcoder 107. The components that make up connection gateway 100 may be independent devices, or may exist within the same device.

In the present embodiment, circuit-switching terminal 101 is connected to circuit-switching network 103. Circuit-switching terminal 101 uses H. 245 in call connection processing according to 3G-324M (image compression encoding) and uses H. 223 as the transmission protocol. Packet-switching terminal 102 is connected to packet-switching network 104 by IP (Internet Protocol). Packet-switching terminal 102 uses SIP as the call connection processing and uses UDP/RTP as the transmission protocol.

Connection gateway 100 is further connected to both circuit-switching network 103 and packet-switching network 104. Connection gateway 100 terminates 3G-324M on the circuit-switching network 103 side, terminates SIP and

UDP/RTP on the packet-switching network 104 side, and carries out relay of media and call connection processes between the two terminals.

In the present embodiment, circuit-switching terminal 101 is a Third-Generation (3G) portable TV telephone terminal, supports AMR (Adaptive Multi-Rate) as the speech encoding method (speech compression encoding method), and supports MPEG-4 as the image encoding method (image compression encoding method). Packet-switching terminal 102 is realized by the execution of software by a personal computer or PDA (Personal Digital Assistant). As the media encoding methods, packet-switching terminal 102 supports the same AMR and MPEG-4 as circuit-switching terminal 101 and as the transmission protocol, supports the 3GPP (3^{rd} Generation Partnership Project) standards that are the standards of a 3G mobile communication system. However, the present invention is obviously not limited to these encoding methods.

Although explanation regards transmission protocol and call connection processing by these protocols for the sake of simplification in the present embodiment, it will be obvious that using other protocols having the same capabilities presents no problems.

The following detailed explanation regards an example in which both H. 223 multiplexed frames and speech RTP packets include one AMR encoded frame in the present embodiment.

Circuit-switching terminal 101, when wishing to connect to packet-switching terminal 102, first establishes a connection with connection gateway 100. Circuit-switching terminal 101, in order to multiplex AMR speech encoded data and MPEG-4 image encoded data by means of H. 223 and transmit, reports H. 223 multiplex table information to call connection unit 105 of connection gateway 100 in a H. 245 negotiation when establishing the connection. This multiplex table is necessary for making preparations for each AMR mode that is supported by circuit-switching terminal 101. As a result, the information of a plurality of multiplex tables is here reported.

Connection gateway 100 acquires the capacity (AMR support mode information) of packet-switching terminal 102 from the SIP/SDP description from SIP server 108 that is connected to packet-switching network 104 and sets the plurality of multiplex tables in accordance with this information. Connection Gateway 100 then reports the multiplex table information to circuit-switching terminal 101 in an H. 245 negotiation. If connection gateway 100 already knows the IP address of packet-switching terminal 102 at this time, the capacity may be acquired directly from packet-switching terminal 102 by SIP instead of from SIP server 108.

Here, if connection gateway 100 ascertains the AMR mode supported by circuit-switching terminal 101 from the speech data length of one or more types indicated in the multiplex table and describes only the supported modes by the SDP notation "mode-set=" (the description can be omitted if all modes are supported) when exchanging capacity by the SIP of packet-switching terminal 102 to report to packet-switching terminal 102, communication from packet-switching terminal 102 to circuit-switching terminal 101 can be realized by only protocol conversion and there is no need for conversion of bit rate. In the SDP notation, for example, the description "mode-set=5, 7;" as the description of modes that are supported among AMR means that modes 5 and 7 are supported and reception is possible. Alternatively, the description "mode-set=1, 2, 3, 4, 5, 6, 7;" or the lack of the description "mode-set=" means that all modes are supported.

If bit rate conversion is to be carried out, connection gateway 100 should transmit to packet-switching terminal 102 a SIP/SDP response indicating that all modes are supported. Connection gateway 100 should then carry out bit rate conversion such that the AMR data received from packet-switching terminal 102 becomes the AMR mode supported by circuit-switching terminal 101 that was ascertained in the H. 245 negotiation and transmit to circuit-switching terminal 101.

Similarly, if the AMR mode supported by packet-switching terminal 102 indicated in SIP/SDP is identical to the AMR mode supported by circuit-switching terminal 101 ascertained in the H. 245 negotiation, communication is possible in the direction from circuit-switching terminal 101 to packet-switching terminal 102 by protocol conversion alone without carrying out bit rate conversion. If the supported modes are different, connection gateway 100 should perform bit rate conversion of the AMR data from circuit-switching terminal 101 to the AMR mode supported by packet-switching terminal 102 and indicated by SIP/SDP and transmit to packet-switching terminal 102. Connection gateway 100, upon receiving multiplexed data of speech and images from circuit-switching terminal 101 by transmission protocol converter 106, separates each of the media of the multiplexed data based on the multiplex table information of circuit-switching terminal 101 obtained by the H. 245 negotiation.

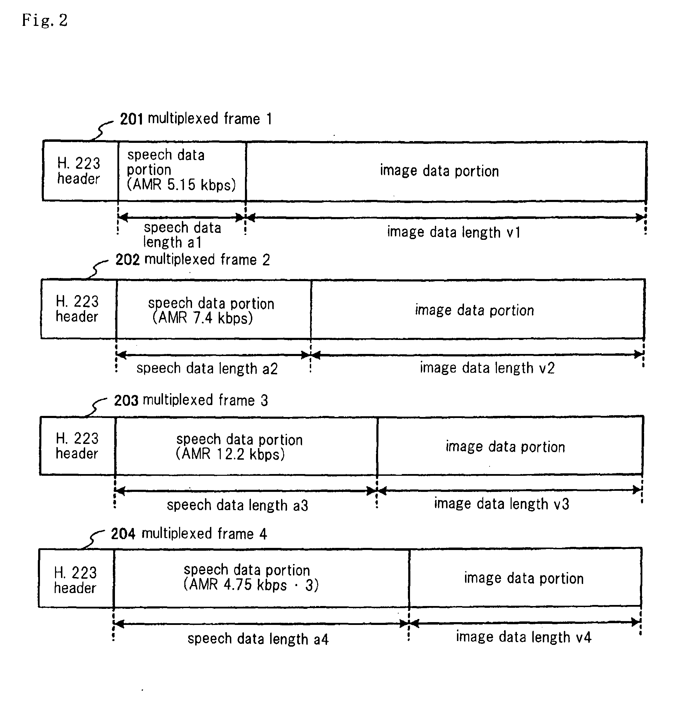

FIG. 2 is a view for explaining a plurality of multiplex tables set by connection gateway 100. Explanation next regards multiplex tables with reference to FIG. 2. Multiplexed frames 1-4 201-204 are multiplexed frames that correspond to each of the modes of AMR. H. 223 multiplexed frame length information and multiplex table identity information are contained in each of the H. 223 headers. The multiplex table that was used in multiplexing of the H. 223 multiplexed frames can be uniquely specified from among the table information acquired in a H. 245 negotiation by means of the multiplex table identity information. The length of each data portion contained in a multiplexed frame can be ascertained from this table information. In other words, the length of the speech data portions (speech data lengths a1-a4) of multiplexed frames 1-4 201-204 can be ascertained from the multiplex table identity information.

Explanation next regards the details of the flow of media from circuit-switching terminal 101 to packet-switching terminal 102 with reference to the figures.

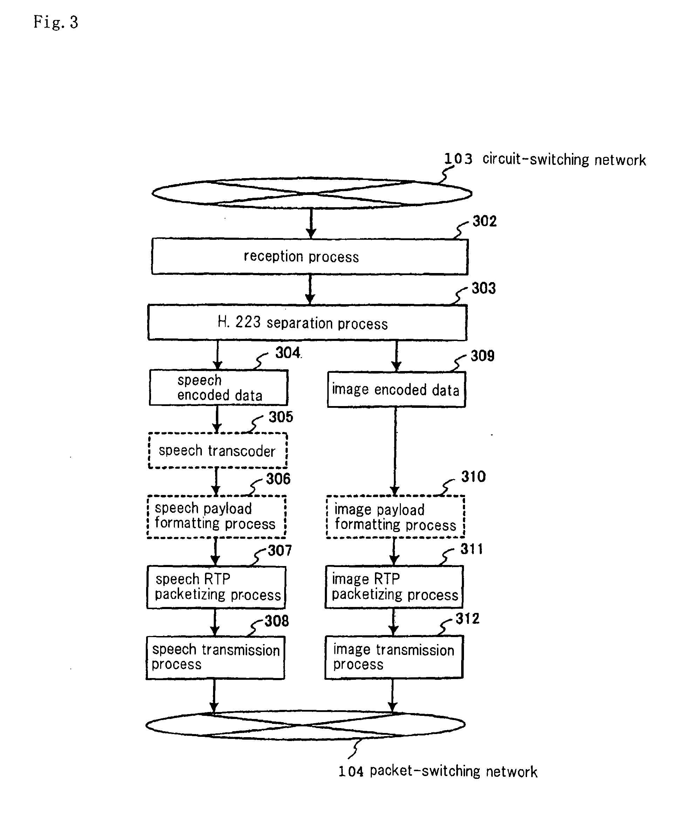

FIG. 3 is a detailed view of the processing flow when transmitting media from a circuit-switching network to a packet-switching network.

In reception process 302, transmission protocol converter 106 receives H. 223 multiplexed data from circuit-switching terminal 101 by way of circuit-switching network 103. In H. 223 multiplexed data, multiplex table identity information is appended to each individual multiplexed frame. H. 223 separation process 303 separates the encoded data of speech and images based on the multiplex table information obtained by this multiplex table identity information and the H. 245 negotiation.

In this case, the encoded frame length in AMR has a one-to-one correspondence with the mode of the encoding bit rate, and the AMR encoding mode is therefore clear from the length of speech encoded data 304 that have been separated. In other words, if the length of the speech data portion of H. 223 multiplex table is ascertained from the multiplex table identity information obtained in the H. 223 frames, then the AMR encoding mode is known. Accordingly, even if the encoding mode of speech encoded data contained in H. 223 multiplexed data from circuit-switching terminal 101 should change during communication, the change of the speech encoding bit rate can be handled in a minimum of each AMR encoded frame (20 msec).

If this speech encoded data 304 is a speech encoding mode that is not supported in the capacity information obtained from the packet-switching terminal, the bit rate of speech encoded data 304 is converted in speech transcoder 305. If the packet-switching terminal supports the encoding mode used in the encoding of speech encoded data 304, processing in speech transcoder 305 is unnecessary.

In the present invention, the transcoder for converting the encoded bit rate may be a tandem transcoder made up from a decoder/encoder pair or may be a non-tandem transcoder that operates by, for example, parameter mapping. Speech encoded data in which the encoding bit rate has been converted according to necessity are formatted to agree with the format of RTP payload by speech payload formatting process 306. In the present embodiment, speech payload formatting process 306 is necessary because RTP is used as the transmission protocol, but this process is unnecessary if the transmission protocol is not RTP.

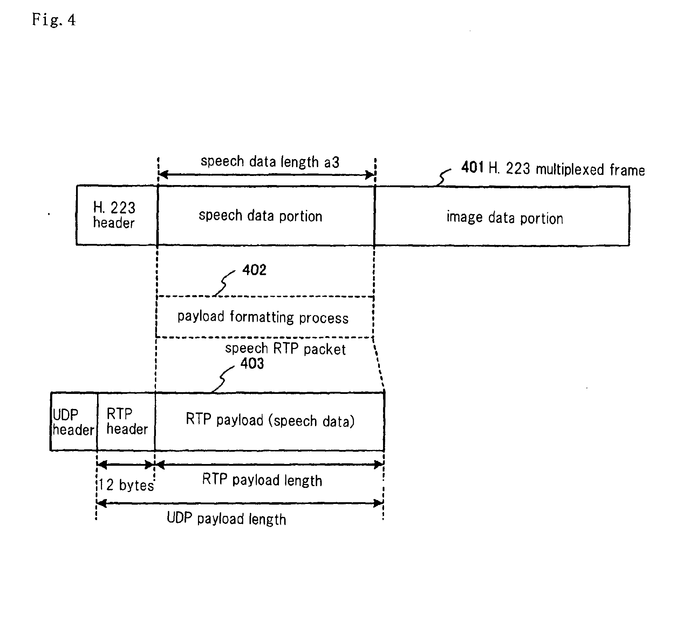

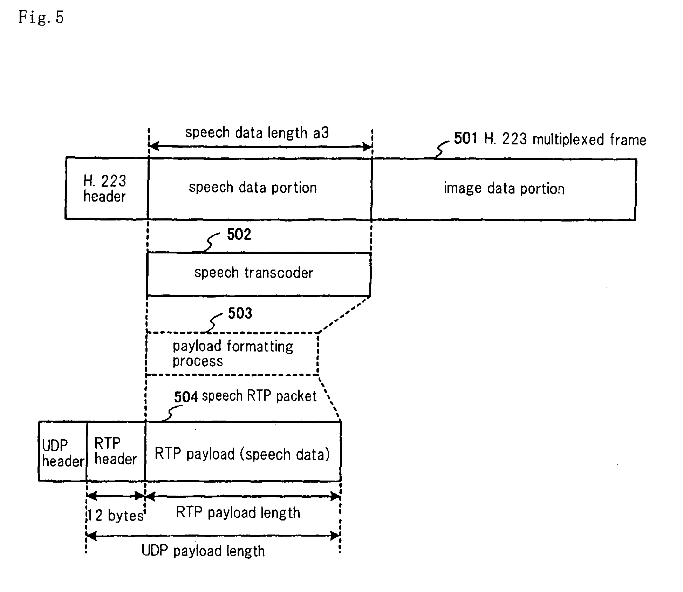

FIG. 4 is a view for explaining the flow for generating speech RTP packets from H. 223 multiplexed frames. FIG. 5 is a view for explaining an example in which a speech transcoder is used when generating speech RTP packets from H. 223 multiplexed frames.

Explanation next regards the flow for generating speech RTP packets from H. 223 multiplexed frames with reference to FIG. 4 and FIG. 5.

First, in the example of FIG. 4, the AMR encoding mode is uniquely specified from the length of the speech data portion (speech data length a3) contained in H. 223 multiplexed frame 401. The encoded data are then subjected to payload formatting process 402 to packetize as RTP packets and thus generate RTP packet 403.

In the example shown in FIG. 5, the AMR encoding mode is specified from the length of the speech data portion (speech data length a3) contained in H. 223 multiplexed frame 501. If the specified encoding mode is a mode not supported by the packet-switching terminal, conversion is implemented to an encoding mode (bit rate) supported by the packet-switching terminal in speech transcoder 502, and the encoded data following conversion are subjected to payload formatting process 503 to packetize as RTP packets, whereby RTP packets 504 are generated.

If it is determined in the capacity exchange with packet-switching terminal that the packet-switching terminal is capable of receiving multiframe RTP packets, a plurality of AMR encoded frames can be contained in the same RTP packet in payload formatting processes 402 and 503.

If speech data are not contained in multiplexed frames that are applied as input to H. 223 separation process 303, encoded data of silence (in the case of AMR, NO DATA frames) are packetized as RTP packets as speech encoded data 304 and transmitted to packet-switching network 104, whereby sound quality deterioration in packet-switching terminal 102 can be suppressed to a low level. Data that have undergone RTP payload formatting are packetized as RTP packets in speech RTP packetizing process 307. Speech RTP packets are transmitted to packet-switching terminal 102 by way of packet-switching network 104 by speech transmission process 308.

Explanation next regards images. Image encoded data 309 that have been separated in H. 223 separation process 303 are subjected to a process for transmitting image encoded data by RTP in image payload formatting process 310. The image encoded data following this process are packetized as RTP packets by image RTP packetizing process 311. Image RTP packets are transmitted to packet-switching terminal 102 by way of packet-switching network 104 by image transmission process 312. If the transmission protocol is not RTP, image payload formatting process 310 is unnecessary, similar to speech.

Explanation next regards the details of the flow of media from packet-switching terminal 102 to circuit-switching terminal 101 with reference to the accompanying drawings.

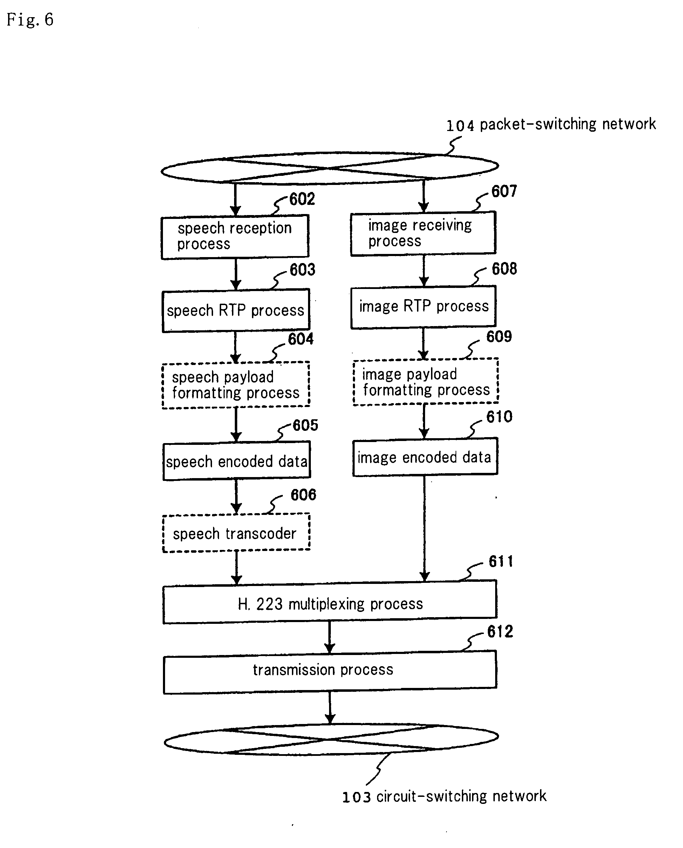

FIG. 6 shows the details of the flow of processes when transmitting media from packet-switching network 100 to circuit-switching network 103.

Connection gateway 100 receives RTP packets of speech from packet-switching network 104 in speech reception process 602, and receives RTP packets of images in image reception process 607. Although their sequencing has been shifted by packet-switching network 104, these RTP packets are put in their original sequencing by speech RTP process 603 or image RTP process 608. Further, speech encoded data 605 are extracted in speech payload formatting process 604, and image encoded data 610 are extracted in image payload formatting process 609.

The encoding mode (bit rate) of speech encoded data 605 is uniquely specified based on the RTP payload length obtained by speech RTP process 603. If speech encoded data 605 are not of an encoding mode supported by circuit-switching terminal 101 obtained in the H. 245 negotiation, the encoding bit rate of speech encoded data 605 is converted by speech transcoder 606. If circuit-switching terminal 101 supports the encoding mode used in the encoding of speech encoded data 605, the process in speech transcoder 606 is unnecessary.

Speech encoded data in which the encoding bit rate has been converted according to necessity are multiplexed together with image encoded data 610 by H. 223 multiplexing process 611 and transmitted to circuit-switching terminal 101 by way of circuit-switching network 103 by transmission process 612. In H. 223 multiplexing process 611, the speech encoded data length is uniquely ascertained from encoding bit rate (mode) information of speech encoded data that are to be multiplexed, whereby the appropriate table is selected from among the multiplex tables reported to circuit-switching terminal 101 in H. 245 and identity information that indicates this multiplex table is stored in the H. 223 header.

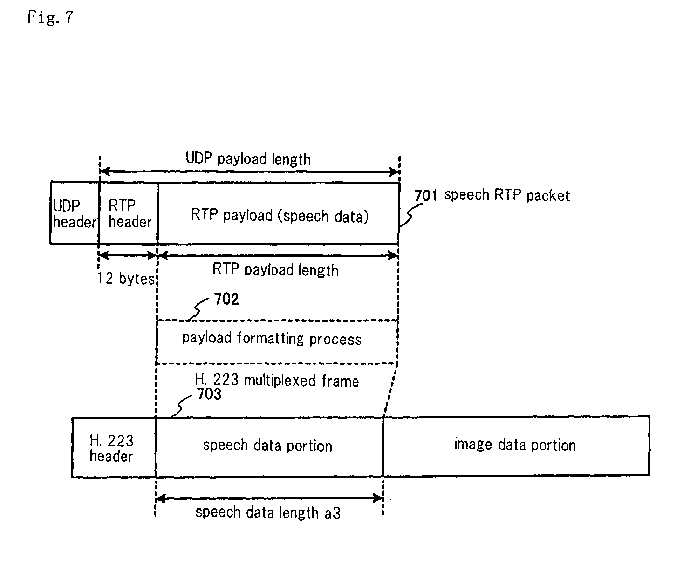

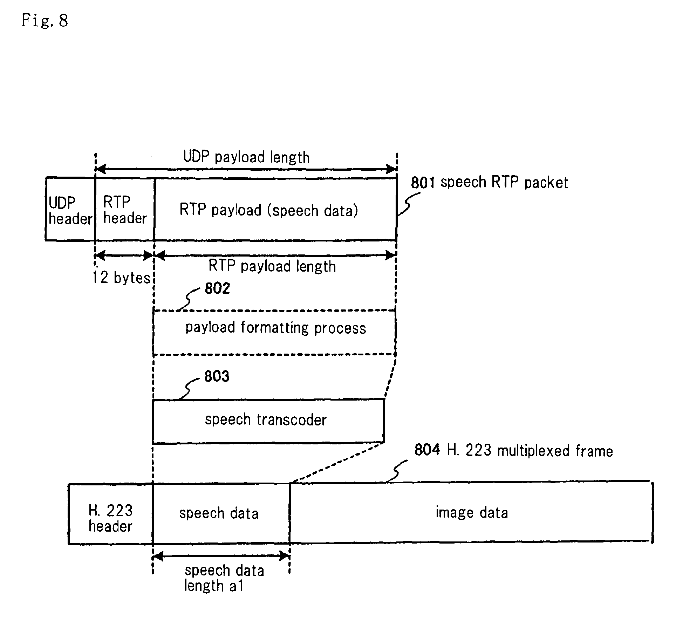

FIG. 7 is a view for explaining the flow of generating H. 223 multiplexed frames from RTP (speech) packets. FIG. 8 is a view for explaining an example of using a speech transcoder when generating H. 223 multiplexed frames from RTP (speech) packets.

Explanation next regards the flow for generating H. 223 multiplexed frames from RTP (speech) packets with reference to FIG. 7 and FIG. 8.

In the example of FIG. 7, the AMR encoding mode (bit rate) contained in RTP packet 701 is uniquely specified from the RTP payload length of speech RTP packet 701. The RTP payload is then subjected to payload formatting process 702 to extract the speech encoded data. The image encoded data contained in the image RTP packets received from packet-switching network 104 are similarly extracted.

The multiplex table appropriate to the AMR encoding mode is selected from among the H. 223 multiplex tables that were reported to circuit-switching terminal 101 in the H. 245 negotiation, and this multiplex table is used to multiplex the speech encoded data and image encoded data and generate H. 223 multiplexed frames 703.

In the example of FIG. 8, the AMR encoding mode (bit rate) contained in RTP packet 801 is uniquely specified from the RTP payload length of speech RTP packet 801. If this mode is not supported by circuit-switching terminal 101, conversion is implemented by speech transcoder 803 to an encoding mode (bit rate) supported by circuit-switching terminal 101. The speech encoded data following conversion and the image encoded data extracted from the image RTP packets received from packet-switching network 104 are then multiplexed using the multiplex table appropriate to the AMR encoding mode after bit rate conversion that was selected from among the H. 223 multiplex tables reported to the circuit-switching terminal in the H. 245 negotiation to generate H. 223 multiplexed frames 804.

If there are no speech data at the timing of multiplexing of speech encoded data and image encoded data by H. 223 multiplexing process 611 (if speech data have not been received from the packet-switching network), encoded data of silence (a NO DATA frame in the case of AMR) should be multiplexed in place of the speech data and transmitted to circuit-switching network 103, whereby deterioration in sound quality in circuit-switching terminal 101 can be suppressed to a low level.

Further, in circuit switching, an upper limit generally applies to the transmission bit rate of H. 223 multiplexed data and transmitting multiplexed data of a rate that exceeds this limit causes delays. However, to suppress the bit rate of the multiplexed data, a portion of the audible speech encoded data may also be replaced with encoded data of silence (NO DATA frames in the case of AMR) that has a smaller amount of data (low bit rate) to carry out the H. 223 multiplexing process and transmission to circuit-switching network 103 then implemented.

### Second Embodiment

A connection gateway for implementing protocol conversion is arranged between a circuit-switching network and a packet-switching network. The connection gateway, upon receiving speech encoded data and image encoded data from the packet-switching network, determines the encoding bit rate from bit rate information contained in the speech encoded data and then converts the speed bit rate if necessary. The connection gateway is provided with a plurality of multiplex tables in advance, selects a multiplex table according to the speech bit rate after conversion, and uses this multiplex table to multiplex the speech encoded data and image encoded data and transmit to the circuit-switching network.

In addition, the connection gateway, upon receiving multiplexed data from the circuit-switching network, separates the multiplexed data into speech encoded data and image encoded data in accordance with multiplex table information. The connection gateway then determines the encoding bit rate from the bit rate information contained in the speech encoded data for the speech encoded data and converts the speech bit rate if necessary. The connection gateway then packetizes the speech encoded data and image encoded data and transmits to the packet-switching network.

A detailed explanation follows below with reference to the figures.

The second embodiment is similar to the first embodiment but differs in the method of determining the bit rate (mode) of speech encoded data. Explanation here chiefly regards the differing portions.

The configuration of the communication system according to the second embodiment is similar to that of the first embodiment shown in FIG. 1. In addition, the call connection protocol, transmission protocol, and encoding method of the second embodiment are also similar to the first embodiment but are obviously not limited to the protocols and method that are shown by way of example.

In addition, the second embodiment is also similar to the first embodiment regarding the call connection processes between circuit-switching terminal 101 and packet-switching terminal 102, such as the process of H. 245 negotiation and processes relating to multiplex tables (FIG. 2).

Explanation next regards the flow of media from circuit-switching terminal 101 to packet-switching terminal 102 with reference to FIG. 3.

In reception process 302, transmission protocol converter 106 receives H. 223 multiplexed data from circuit-switching terminal 101 by way of circuit-switching network 103. In the H. 223 multiplexed data, multiplex table identity information is appended to each of the multiplexed frames. In H. 223 separation process 303, the encoded data of speech and images are separated based on this multiplex table identity information and multiplex table information received by H. 245.

Regarding AMR, mode information of the encoding bit rate (encoding bit rate information) is contained at the head of encoded data, and the AMR encoding mode is therefore determined from separated speech encoded data 304. In this way, changes in the speech encoded data bit rate can be dealt with at each AMR encoded frame (20 msec) at a minimum despite changes during communication in the encoding mode of speech encoded data contained in H. 223 multiplexed data from circuit-switching terminal 101.

If these speech encoded data 304 are not supported by a speech encoding mode included in the capacity information obtained from the packet-switching terminal, the encoding bit rate of speech encoded data 304 is converted by speech transcoder 305. If the packet-switching terminal supports the encoding mode used in the encoding of speech encoded data 304, the process in speech transcoder 305 is not necessary.

Speech encoded data in which the encoding bit rate has been converted as necessary are formatted to match the format of the RTP payload by speech payload formatting process 306. In the present embodiment, speech payload formatting process 306 exists because RTP is used as the transmission protocol, but this process becomes unnecessary if the transmission protocol is not RTP.

Explanation next regards the flow of media from packet-switching terminal 102 to circuit-switching terminal 101 with reference to FIG. 6.

Connection gateway 100 receives speech RTP packets from packet-switching network 104 in speech reception process 602, and receives image RTP packets in image reception process 607. Even though the sequencing of these RTP packets has been shifted by packet-switching network 104, the original sequencing is arranged by speech RTP process 603 and image RTP process 608. Speech encoded data 605 are further extracted in speech payload formatting process 604, and image encoded data 610 are extracted in image payload formatting process 609.

If speech encoded data 605 are not an encoding mode supported by circuit-switching terminal 101 obtained in the H. 245 negotiation, the bit rate of speech encoded data 605 is converted by speech transcoder 606. If circuit-switching terminal 101 supports the encoding mode used in the encoding of speech encoded data 605, the process in the speech transcoder 606 is unnecessary. Speech encoded data in which the encoding bit rate has been converted as necessary are multiplexed together with image encoded data 610 by H. 223 multiplexing process 611 and transmitted to circuit-switching terminal 101 by way of circuit-switching network 103 by transmission process 612. In H. 223 multiplexing process 611, the speech encoded data length is uniquely ascertained from the encoding bit rate (mode) information of the speech encoded data that are multiplexed, the appropriate table is selected from among the multiplex tables reported to circuit-switching terminal 101 in H. 245, and the identity information that indicates the multiplex table is stored in the H. 223 header.

The second embodiment is similar to the first embodiment regarding processing other than the process of identifying the bit rate of AMR encoded frames from the encoding mode information contained in the above-described AMR speech encoded data.

### Third Embodiment

A connection gateway for implementing protocol conversion is arranged between a circuit-switching network and a packet-switching network. The connection gateway, upon receiving speech encoded data and image encoded data from the packet-switching network, determines the encoded frame length from the payload length of the speech packets, separates the received data into encoded frames, and converts the speech bit rate if necessary. The connection gateway is provided with a plurality of multiplex tables in advance, selects a multiplex table according to the speech bit rate after conversion, and uses the multiplex table to multiplex the speech encoded data and image encoded data and then transmit to circuit-switching network.

The connection gateway, upon receiving multiplexed data from the circuit-switching network, separates the multiplexed data into speech encoded data and image encoded data according to multiplex table information. The connection gateway then converts the speech bit rate if determined to be necessary based on the encoded data length. The connection gateway next packetizes the speech encoded data and image encoded data and transmits to the packet-switching network.

When separating the payload of packets to encoded frames, the speech encoding bit rate obtained from the call connection process may be used.

A detailed explanation follows below with reference to the figures.

The third embodiment is similar to the first embodiment but differs in that the speech encoded frames contained in H. 223 multiplexed frames and speech encoded frames contained in speech RTP packets are both pluralities. Explanation now chiefly regards the portions that differ.

The configuration of the communication system according to the third embodiment is similar to that of the first embodiment shown in FIG. 1. In addition, the call connection protocol, transmission protocol, and encoding method of the third embodiment are similar to the first embodiment, but the present invention is obviously not limited to the protocol and encoding method shown by way of example.

In addition, the third embodiment is similar to the first embodiment with regard to call connection processes between circuit-switching terminal 101 and packet-switching terminal 102 such as the H. 245 negotiation and processes relating to multiplex tables (FIG. 2).

Explanation next regards the flow of media from circuit-switching terminal 101 to packet-switching terminal 102 with reference to FIG. 3.

Transmission protocol converter 106 receives H. 223 multiplexed data from a terminal by way of circuit-switching network 103 in reception process 302. In H. 223 multiplexed data, multiplex table identity information is appended to each multiplexed frame. H. 223 separation process 303 separates encoded data of speech and images based on this multiplex table identity information and the multiplex table information obtained by H. 245.

Here, if the length of the speech encoded data is equal to an integer multiple of the length of one AMR encoded frame, the AMR encoding mode (bit rate) is clear from one AMR encoded frame length obtained by dividing the speech encoded data into an integer number of divisions.

If the speech encoding mode determined from speech encoded data 304 is not supported by a speech encoding mode contained in the capacity information obtained from the packet-switching terminal, the encoding bit rate of speech encoded data 304 is converted by speech transcoder 305. If the packet-switching terminal supports the encoding mode used in encoding speech encoded data 304, the process in speech transcoder 305 is not necessary. Speech encoded data in which the encoding bit rate has been converted as necessary are formatted to match the format of the RTP payload by speech payload formatting process 306. In the present embodiment, speech payload formatting process 306 exists because RTP is used as the transmission protocol, but this process is unnecessary if the transmission protocol is not RTP.

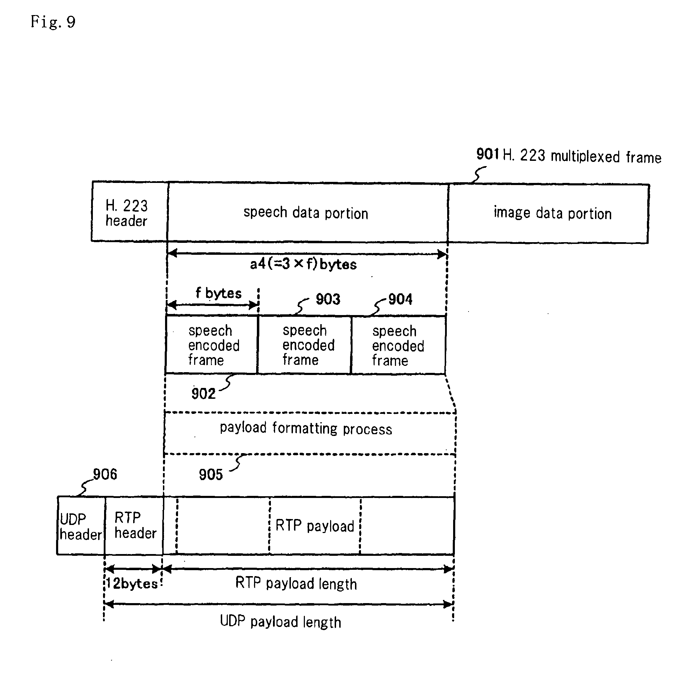

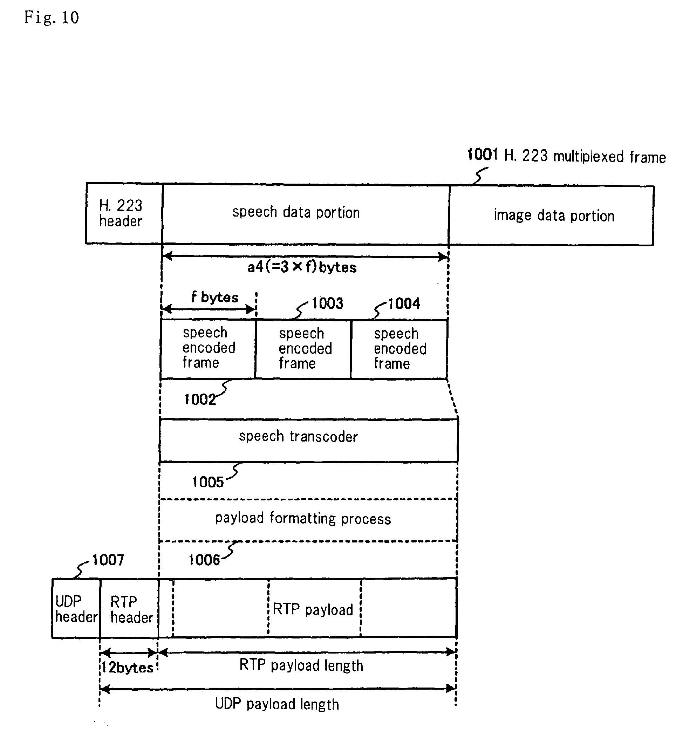

FIG. 9 is a view for explaining the flow in generating speech RTP packets from H. 223 multiplexed frames. FIG. 10 is a view for explaining an example of using a speech transcoder when generating speech RTP packets from H. 223 multiplexed frames.

Explanation next regards the flow when generating RTP packets of speech from H. 223 multiplexed frames with reference to FIG. 9 and FIG. 10.

In the example of FIG. 9, assuming that the length of the speech data portion (speech data length a4) contained in H. 223 multiplexed frame 901 is an integer multiple of AMR encoded frame length f, the AMR encoding mode and frame number can be uniquely specified, and each of AMR encoded frames 902-904 can be separated. AMR encoded frame 902 is subjected to payload formatting process 905 to convert to RTP packets and thus generate RTP packet 906.

In the example of FIG. 10, if the length of the speech data portion (speech data length a4) contained in H. 223 multiplexed frame 1001 is an integer multiple of AMR encoded frame length f, the AMR encoding mode and frame number can be uniquely specified based on this relation. If the AMR encoding mode is a mode not supported by the packet-switching terminal, conversion is implemented to an encoding mode (bit rate) that is supported by the packet-switching terminal by means of speech transcoder 1005. The encoded data following conversion are then subjected to payload formatting process 1006 to packetize as RTP packets and thus generate RTP packets 1007.

If it is clear from the capacity exchange with the packet-switching terminal that the packet-switching terminal has the capability to receive RTP packets of multiframes, a plurality of AMR encoded frames can be contained in the same RTP packet in payload formatting processes 905 and 1006. If the packet-switching terminal lacks the capability to receive RTP packets of multiframes, an RTP packet payload formatting process and RTP packetizing are carried out for each speech encoded frame.

Explanation next regards the flow of media from packet-switching terminal 102 to circuit-switching terminal 101 with reference to FIG. 6.

Connection gateway 100 first receives speech and image RTP packets from packet-switching network 104 in speech reception process 602 and image reception process 607, respectively. The sequencing of these RTP packets that has been shifted by packet-switching network 104 is rearranged by means of speech RTP process 603 or image RTP process 608. Speech encoded data 605 are extracted in speech payload formatting process 604, and image encoded data 610 are extracted in image payload formatting process 609.

In speech payload formatting process 604, if a plurality of AMR encoded frames is contained in one speech RTP packet, a plurality of speech encoded data items are obtained by separating into each individual AMR encoded frame. If RTP or RTP payload formatting is not used as the transmission protocol, the length of the payload portion is an integer multiple of one speech encoded frame, and each individual can therefore be separated. In this process, the frame length can be estimated from the encoding mode that is supported by packet-switching terminal 102 and obtained in the call connection process.

If speech encoded data 605 are not an encoding mode supported by circuit-switching terminal 101 and obtained in the H. 245 negotiation, a speech transcoder 606 converts the bit rate of speech encoded data 605. If the circuit-switching terminal supports the encoding mode used in encoding speech encoded data 605, the process in speech transcoder 606 is unnecessary. Speech data in which the encoding bit rate has been converted as necessary are multiplexed together with image encoded data 610 by H. 223 multiplexing process 611 and transmitted by way of circuit-switching network 103 to the circuit-switching terminal by transmission process 612. In H. 223 multiplexing process 611, the speech encoded data length is uniquely distinguished by the encoding bit rate (mode) information of the multiplexed speech encoded data. As a result, the speech data length that is a multiple of the number of speech encoded frames contained in the same H. 223 frame is ascertained, the appropriate table is selected from among the multiplex tables reported to the circuit-switching terminal in H. 245, and identity information indicating this multiplex table is stored in the H. 223 header.

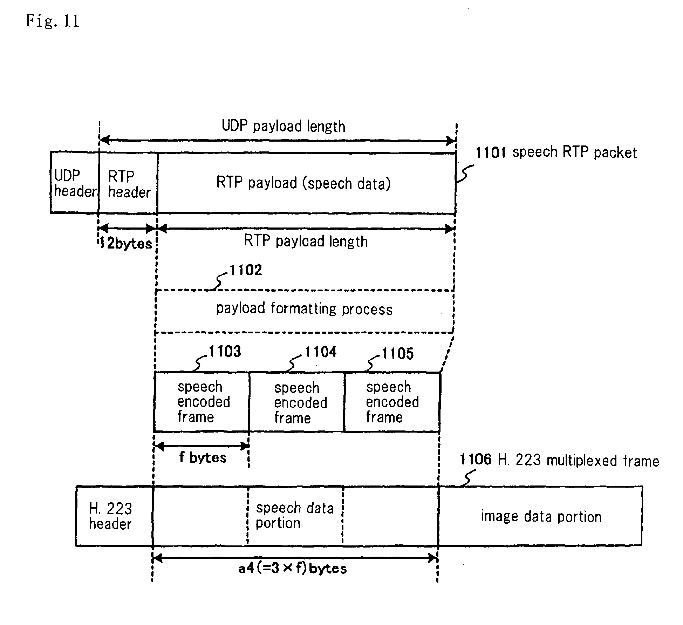

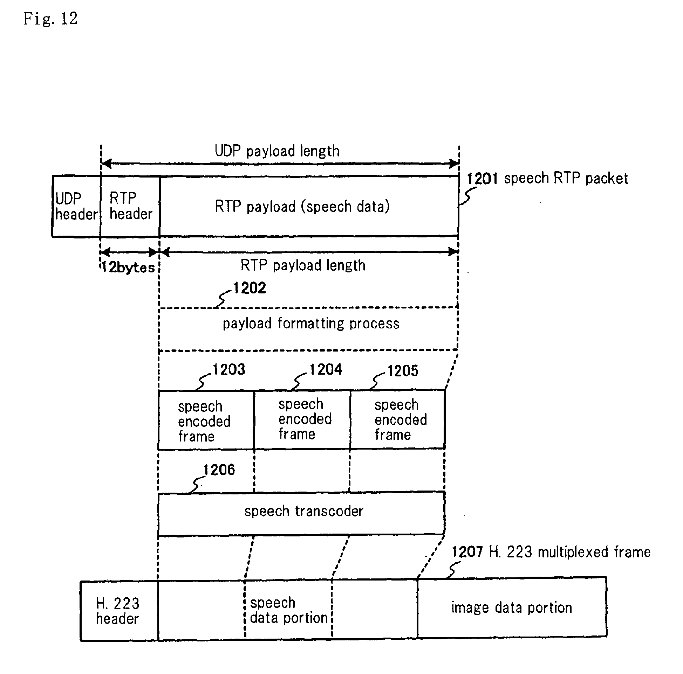

FIG. 11 is a view for explaining the flow of generating H. 223 multiplexed frames from RTP (speech) packets. FIG. 12 is a view for explaining an example of using a speech transcoder when generating H. 223 multiplexed frames from RTP (speech) packets.

Explanation next regards the flow of generating H. 223 multiplexed frames from RTP (speech) packets with reference to FIG. 11 and FIG. 12.

In the example of FIG. 11, speech data, which are the RTP payload of speech RTP packet 1101, are subjected to payload formatting process 1102 to extract individual AMR encoded frames 1103-1105. When RTP and RTP payload formatting are not followed as the transmission protocol and if the payload length is an integer multiple of one speech encoded frame, each individual speech encoded frame is separated based on this relation. These speech encoded frames and the image encoded data that were contained in the image RTP packets similarly received from packet-switching network 104 are multiplexed to generate H. 223 multiplexed frames 1106. In this multiplexing, of the H. 223 multiplex tables that were reported to circuit-switching terminal 101 in the H. 245 negotiation, the multiplex table is used that is appropriate to the AMR encoding mode according to the sum of the encoded frame lengths contained in the same H. 223 multiplexed frame. In the example of FIG. 11, a plurality of speech encoded frames are multiplexed in the speech data portion of one H. 223 multiplexed frame. However, if there are only tables corresponding to a single speech encoded frame in the speech data portion of the H. 223 multiplex tables, a plurality of H. 223 multiplexed frames are generated in which individual speech encoded frames are each multiplexed.

In the example of FIG. 12, speech data that are the RTP payload of speech RTP packet 1201 are subjected to payload formatting process 1202 to extract each of individual AMR encoded frames 1203-1205. The AMR encoding mode (bit rate) is uniquely specified from the length of these AMR encoded frames. If the specified AMR encoding mode is a mode not supported by circuit-switching terminal 101, speech transcoder 1206 effects conversion to an encoding mode (bit rate) that is supported by circuit-switching terminal 101. The obtained speech encoded frames are multiplexed with image encoded data that were contained in image RTP packets received from packet-switching network 103 to generate H. 223 multiplexed frames 1207. In this multiplexing, of the H. 223 multiplex tables reported to the circuit-switching terminal in the H. 245 negotiation, the multiplex table is used that is appropriate to the AMR encoding mode following bit rate conversion. In the example of FIG. 12, a plurality of speech encoded frames are multiplexed in the speech data portion of one H. 223 multiplexed frame. However, if there are only tables corresponding to a single speech encoded frame in the speech data portion of H. 223 multiplex tables, a plurality of H. 223 multiplexed frames are generated in which individual speech encoded frames are each multiplexed.

In FIGs. 11 and 12, examples were described in which the number of AMR encoded frames contained in one H. 223 multiplexed frame was three, but the number of AMR encoded frames contained in a multiplexed frame is of course not limited to this number.

Apart from the above-described content, the third embodiment is the same as the first embodiment.

### Fourth Embodiment

A connection gateway for implementing protocol conversion is arranged between a circuit-switching network and a packet-switching network. The connection gateway, upon receiving speech encoded data and image encoded data from the packet-switching network, determines one encoded frame length from the bit rate information contained in the speech encoded data to separate into encoded frames, and if necessary, converts the speech bit rate. The connection gateway is provided with a plurality of multiplex tables in advance, selects a multiplex table according to the speech bit rate after conversion, and uses the multiplex table to multiplex the speech encoded data and image encoded data and transmit to the circuit-switching network.

Upon receiving multiplexed data from the circuit-switching network, the connection gateway separates the multiplexed data into speech encoded data and image encoded data in accordance with the multiplex table information. The connection gateway then, regarding the speech encoded data, converts the speech bit rate if determined to be necessary from the bit rate information contained in the speech encoded data. The connection gateway then packetizes each of the speech encoded data and image encoded data and transmits to the packet-switching network. In addition, the speech encoding bit rate obtained from the call connection process may be used when separating the packet payload in encoded frame units.

A detailed explanation follows below with reference to the accompanying drawings.

The fourth embodiment is similar to the third embodiment, but differs only with respect to the method of determining the bit rate (mode) of speech encoded data. Explanation here chiefly regards the differing points.

The configuration of the communication system according to the fourth embodiment is similar to that of the first embodiment shown in FIG. 1. In addition, the call connection protocol, transmission protocol, and encoding method in the fourth embodiment are all similar to the first embodiment, but the fourth embodiment is of course not limited to the protocols and encoding method shown by way of example.

In addition, the fourth embodiment is also similar to the first embodiment regarding the call connection processes of the circuit-switching terminal 101 and packet-switching terminal 102 such as the process of the H. 245 negotiation and the process regarding the multiplex tables (FIG. 2). Explanation next regards the flow of media from circuit-switching terminal 101 to packet-switching terminal 102 with reference to FIG. 3.

In reception process 302, transmission protocol converter 106 receives H. 223 multiplexed data from circuit-switching terminal 101 by way of circuit-switching network 103. In the H. 223 multiplexed data, multiplex table identity information is appended to each of the multiplexed frames. H. 223 separation process 303 separates the encoded data of speech and images based on this multiplex table identity information and multiplex table information obtained in H. 245.

Here, AMR contains mode information of the encoding bit rate at the head of encoded data, and the AMR encoding mode is therefore clear from the data of separated speech encoded data 304, whereby changes in the encoding mode of speech encoded data contained in H. 223 multiplexed data from circuit-switching terminal 101 during communication can be dealt with in changes of the speech encoded bit rate for each AMR encoded frame (20 msec) at a minimum.

If these speech encoded data 304 are not supported by a speech encoding mode contained in the capacity information obtained from the packet-switching terminal, the encoding bit rate of speech encoded data 304 is converted by speech transcoder 305. If the packet-switching terminal supports the encoding mode used in encoding speech encoded data 304, the process in speech transcoder 305 is unnecessary.

The speech encoded data in which the encoding bit rate has been converted as necessary are formatted to match the format of the RTP payload by speech payload formatting process 306. Speech payload formatting process 306 exists in the present embodiment because RTP is used as the transmission protocol, but this process is unnecessary if the transmission protocol is not RTP. Explanation next regards the flow of media from packet-switching terminal 102 to circuit-switching terminal 101 with reference to FIG. 9 and FIG. 10.

In the example of FIG. 9, the frame length of speech encoded frame 902 is clear from encoding mode information contained at the head of the speech encoded data. The frame length of the next speech encoded frame 903 is clear from the encoding mode information contained in the head of speech encoded frame 903. The frame length of the next speech encoded frame 904 is clear from the encoding mode information contained at the head of speech encoded frame 904. In this way, each of encoded frames 902-904 can be separated, and the encoding mode (bit rate) of each is clear. AMR encoded frame 902 is next subjected to payload formatting process 905 and converted to RTP packets to generate RTP packet 906.

On the other hand, in the example of FIG. 10, each of individual speech encoded frames 1002-1004 is separated based on the encoding mode information contained in the speech data contained in H. 223 multiplexed frame 1001, as in the case of FIG. 9, and the encoding mode information can be acquired. If speech encoded frames 1002-1004 are encoding modes not supported by packet-switching terminal 102, the encoding modes are converted by speech transcoder 1005 to encoding modes (bit rate) supported by the packet-switching terminal. The encoded data after conversion are then subjected to payload formatting process 1006 to convert to RTP packets to generate RTP packet 1007.

If it is clear from the capacity exchange with the packet-switching terminal that the packet-switching terminal is capable of receiving multiframe RTP packets, payload formatting processes 905 and 1006 can contain a plurality of AMR encoded frames in the same RTP packet.

Explanation next regards the transmission of media from packet-switching terminal 102 to circuit-switching terminal 101 with reference to FIG. 6. Connection gateway 100 receives RTP packets of speech and images from packet-switching network 104 in speech reception process 602 and image reception process 607, respectively. The sequencing of these RTP packets that has been shifted by packet-switching network 104 is rearranged by speech RTP process 603 and image RTP process 608. Speech encoded data 605 are extracted in speech payload formatting process 604, and image encoded data 610 are extracted in image payload formatting process 609.

In speech payload formatting process 604, if a plurality of AMR encoded frames is contained in one speech RTP packet, each of the AMR encoded frames is separated to acquire a plurality of speech encoded data items. If RTP or RTP payload format is not used as the transmission protocol, the length of one speech encoded frame can be specified from the encoding mode information contained at the head of each speech encoded frame, whereby each individual encoded frame is separated based on this length of one speech encoded frame.

Regarding content other than that described above, the fourth embodiment is the same as the third embodiment.

### Fifth Embodiment

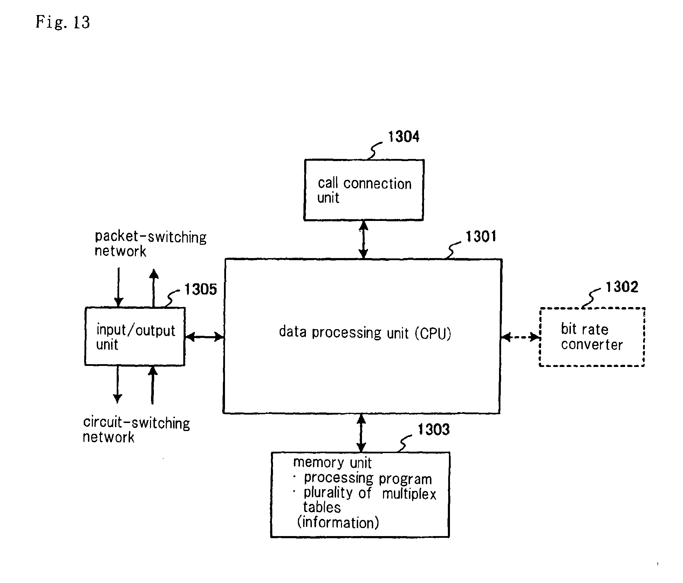

FIG. 13 is a block diagram showing the configuration of a computer processing system for realizing the connection gateway in the fifth embodiment. This computer processing system is realized as a protocol conversion server and executes a protocol conversion process for enabling communication of media between a packet-switching network and a circuit-switching network similar to the first to fourth embodiments.

Referring to FIG. 13, the computer processing system is made up from data processing unit (CPU) 1301, bit rate converter (speech transcoder) 1302, memory unit 1303, call connection unit 1304, and input/output unit 1305. Bit rate converter 1302 converts the data rate of speech encoded data. Memory unit 1303 stores various types of data such as processing programs and the information of a plurality of multiplex tables. Call connection unit 1304 carries out the call connection processes that include such processes as the H. 245 negotiation. Input/output unit 1305 realizes the input to and output from data processing unit 1301 of the media that are exchanged between packet-switching network 104 and circuit-switching network 103.

The processes relating to transmission protocol converter 106, speech transcoder 107, and call connection unit 105 in connection gateway 100 shown in FIG. 1 are chiefly executed by data processing unit 1301 of FIG. 13.

The basic functions of the fifth embodiment are similar to those of the first embodiment. The fifth embodiment is further similar to the first embodiment with regard to the call connection protocol, transmission protocol, and encoding method. The fifth embodiment is further similar to the first embodiment regarding the call connection processes between circuit-switching terminal 101 and packet-switching terminal 102 such as the H. 245 negotiation and the multiplex tables (FIG. 2). The present invention is not limited to particular protocols and encoding method.

The processes of connection gateway 100 of the present embodiment are carried out by the reading and execution, by data processing unit 1301, of the processing program for protocol conversion that has been stored in memory unit 1303. In other words, the processing program that has been read controls the operations of data processing unit 1301, whereby data processing unit 1303 carries out the processes for protocol conversion.

To begin bidirectional communication between terminals 101 and 102 that are connected to circuit-switching network 103 and packet-switching network 104, respectively, requires various negotiations relating to protocol conversion by way of call connection unit 1304. Call connection unit 1304 carries out the exchange of, for example, an H. 245 negotiation regarding the change of multiplex tables when altering the bit rate in communication between terminals. In addition, call connection unit 1304 acquires exchange capacity information for comprehending SIP/SDP relating to terminal 102 of packet-switching network 104. Necessary information such as a plurality of multiplex tables (information) is then stored in memory unit 1303 in advance by the notification of all multiplex tables (the allotment of data) by means of negotiations by the processing of call connection unit 1304 and data processing unit 1301.

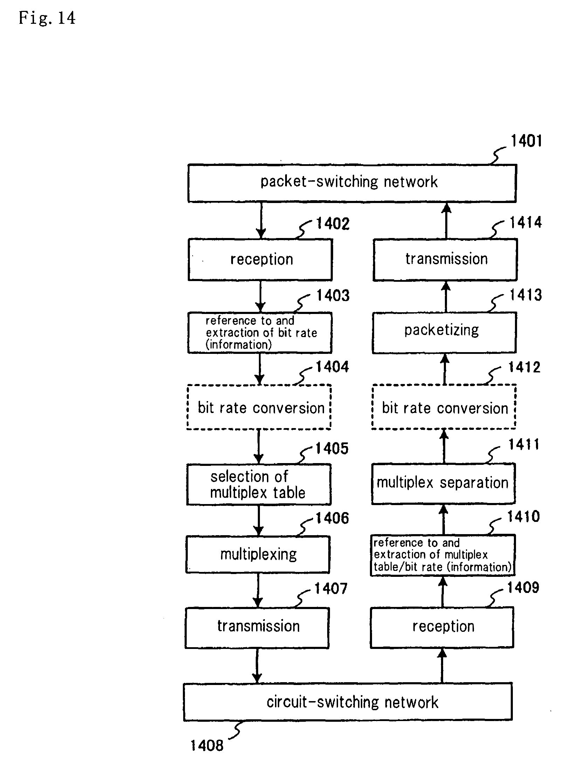

FIG. 14 is a view showing the basic processing functions and the flow of processes of data processing unit 1301 for media that are transmitted and received between circuit-switching network 103 and packet-switching network 104. FIG. 14 shows an example that corresponds to the first and second embodiments. The actual flow of processes for media conversion between circuit-switching network 103 and packet-switching network 104 are as shown in FIGs. 3-8, and this figure therefore shows only the basic flow of processes. Explanation next regards the processing functions and flow of media between a circuit-switching terminal and packet-switching terminal according to the protocol conversion processes that correspond to the first embodiment in the fifth embodiment with reference to FIG. 14.

Data processing unit 1301, upon receiving packets from packet-switching network 104 (1402), refers to the speech encoding bit rate based on the payload length of these speech packets (1403). Data processing unit 1301 further, upon receiving multiplexed data from circuit-switching network 103 (1409), refers to the speech encoding bit rate based on the speech data length obtained from the multiplex table of these multiplexed data (1410).

Data processing unit 1301 then determines whether bit rate conversion is necessary from the payload length of speech packets, and if necessary, speech encoded data and image encoded data received from packet-switching network 104 undergo bit-rate conversion to the bit rate of circuit-switching network 103 in bit rate converter 1302 (1404). Data processing unit 1301 next selects from memory unit 1303 the appropriate multiplex table that corresponds to the speech bit rate following conversion (1405), multiplexes the speech encoded data based on this multiplex table (1406), and transmits the obtained multiplexed data to circuit-switching network 103 (1407).

Data processing unit 1301 further, in accordance with the multiplex table information (1410), separates the multiplexed data received from circuit-switching network 103 to speech encoded data and image encoded data (1411). Data processing unit 1301 then determines the bit rate from the encoded data length for the speech encoded data and converts the bit rate if necessary (1412). Data processing unit 1301 then packetizes each of speech encoded data and image encoded data (1413) and transmits to packet-switching network 103 (1414).

Explanation next regards the flow of media between circuit-switching terminal 101 and packet-switching terminal 102 by means of the protocol conversion process that corresponds to the second embodiment in the fifth embodiment. Data processing unit 1301, upon receiving packets from packet-switching network 104 (1402), extracts bit rate information contained in speech encoded data obtained from these packets (1403). Data processing unit 1301 further, upon receiving multiplexed data from circuit-switching network 103 (1409), extracts bit rate information contained in the speech encoded data obtained from these multiplexed data (1410).

Data processing unit 1301 then determines whether bit rate conversion is necessary from the bit rate information contained in the speech encoded data, and if necessary, implements bit-rate conversion of the speech encoded data and image encoded data received from packet-switching network 104 in bit rate converter 1302 (1404). Data processing unit 1301 next selects from memory unit 1303 the appropriate multiplex table based on the speech bit rate (1405) and uses this multiplex table to multiplex (1406) and transmit to circuit-switching network 103 (1407)

Data processing unit 1301 further, based on the multiplex table information (1410), separates the multiplexed data received from circuit-switching network 103 into speech encoded data and image encoded data (1411). Data processing unit 1301 then, for the speech encoded data, determines whether bit rate conversion is necessary from the bit rate information contained in the speech encoded data, and if necessary, implements bit rate conversion (1412). Data processing unit 1301 then packetizes each of the speech encoded data and image encoded data (1413) and transmits to packet-switching network 104 (1414).

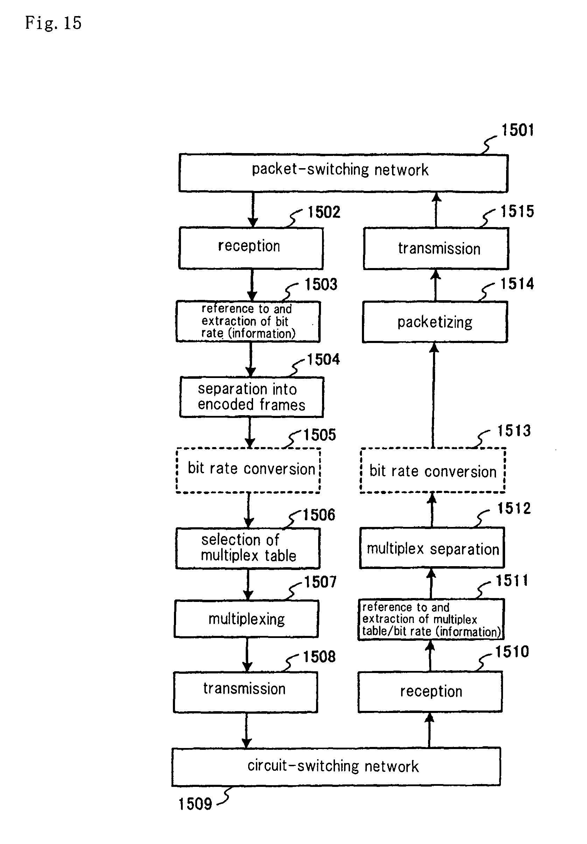

FIG. 15 shows the basic processing functions and the flow of processes of data processing unit 1301 for media that are transmitted and received between circuit-switching network 103 and packet-switching network 104. FIG. 15 shows an example that corresponds to the third and fourth embodiments. The actual media conversion process flow between circuit-switching network 103 and packet-switching network 104 is as shown in FIGs. 9-12, and this figure shows only the basic process flow.

Explanation next regards the flow of media between a circuit-switching terminal and a packet-switching terminal by the protocol conversion processes that correspond to the third embodiment in the fifth embodiment with reference to FIG. 15. The protocol conversion process shown here is an example that takes as an object speech encoded data that contain a plurality of speech encoded frames.

Data processing unit 1301, upon receiving packets from packet-switching network 104 (1502), refers to the speech encoding bit rate from the payload length obtained from these packets (1503). Data processing unit 1301 further, upon receiving multiplexed data from circuit-switching network 103 (1510), refers to the bit rate from the speech data length obtained from the multiplex table of these multiplexed data (1511).

Data processing unit 1301 then, upon receiving speech encoded data and image encoded data from packet-switching network 104, determines the length of one encoded frame of the plurality of speech encoded frames of the speech encoded data from the payload length of a speech packet, and separates the encoded data into encoded frames based on the length of one encoded frame (1504). Data processing unit 1301 further converts bit rate of the speech encoded data if necessary (1505). Data processing unit 1301 then selects the appropriate multiplex table from memory unit 1303 in accordance with the speech bit rate after conversion (1506), multiplexes in accordance with the multiplex table (1507), and transmits to circuit-switching network 103 (1508). Data processing unit 1301, in accordance with the multiplex table information (1511), separates multiplexed data received from circuit-switching network 103 into speech encoded data and image encoded data (1512). Data processing unit 1301 then determines bit rate from the encoded data length for the speech encoded data, and if necessary, implements bit rate conversion (1513). Data processing unit 1301 next packetizes each of speech encoded data and image encoded data (1514) and transmits to packet-switching network 104 (1515). When separating the payload of speech packets into encoded frame units in the above-described process, a processing function may be provided for obtaining the speech encoding bit rate from the call connection process of call connection unit 1304 and the speech encoding bit rate obtained thereby may then be used.

Explanation is next given by FIG. 15 of the flow of media between a circuit-switching terminal and a packet-switching terminal by the protocol conversion process that corresponds to the fourth embodiment in the fifth embodiment.

The protocol conversion process also takes as an object speech encoded data composed of a plurality of speech encoded frames.

Data processing unit 1301, upon receiving packets from packet-switching network 104 (1502), extracts bit rate information contained in speech encoded data obtained from these packets (1503). Data processing unit 1301 further, upon receiving multiplexed data from circuit-switching network 103 (1510), extracts bit rate information contained in speech encoded data obtained from these multiplexed data (1511).

Data processing unit 1301 then determines the length of one encoded frame from the bit rate information contained in the speech encoded data and separates the speech encoded data and image encoded data received from packet-switching network 104 into encoded frames based on the length of one encoded frame (1504). Data processing unit 1301 further implements bit rate conversion of the encoded frames if necessary (1505). Data processing unit 1301 next selects from memory unit 1303 the appropriate multiplex table according to the speech bit rate after conversion (1506), multiplexes by means of this multiplex table (1507), and transmits to circuit-switching network 103 (1508).

Data processing unit 1301 further, in accordance with the multiplex table information (1511), separates multiplexed data received from circuit-switching network 103 into speech encoded data and image encoded data (1512). Data processing unit 1301 determines from bit rate information contained in the speech encoded data whether bit rate conversion is necessary for the speech encoded data, and if necessary, implements bit rate conversion (1513). Data processing unit 1301 next packetizes each of speech encoded data and image encoded data (1514) and transmits to packet-switching network 104 (1515).

In the above-described processes, a processing function may be added for obtaining the speech encoding bit rate from the call connection process of call connection unit 1304 when separating the payload of speech packets into encoded frame units, and the speech encoding bit rate obtained thereby may then be used.

## Claims

1. A protocol conversion method for, in media communication by way of a packet-switching network and circuit-switching network, converting protocols between said packet-switching network and said circuit-switching network, said protocol conversion method comprising steps of:
analyzing speech packets received from said packet-switching network and specifying the encoding bit rate of speech data in the speech packets;
from said encoding bit rate, specifying a multiplex table to be used in multiplexing frames on said circuit-switching network;
multiplexing data in a payload of packets received from said packet-switching network using said multiplex table that was specified to generate frames; and
transmitting said frames that were generated to said circuit-switching network.

2. A protocol conversion method according to claim 1, wherein the encoding bit rate of said speech data is specified from the payload length of said packets of speech received from said packet-switching network.

3. A protocol conversion method according to claim 2, wherein, if the payload length of said packets of speech received from said packet-switching network is an integer multiple of the frame length of speech encoded frames of any encoding bit rate, the encoding bit rate is determined to be an encoding bit rate of speech data in said speech packets.

4. A protocol conversion method according to claim 1, wherein the encoding bit rate of said speech data is specified from bit rate information contained in encoded data in the payload of said packets of speech received from said packet-switching network.

5. A protocol conversion method according to any one of claims 1 to 4, wherein, when an encoding bit rate that is not supported by terminals on said circuit-switching network side is allowed in terminals on said packet-switching network side, if the encoding bit rate of said speech data that has been specified by analyzing the content of packets of speech received from said packet-switching network is not supported by terminals on said circuit-switching network side, conversion is implemented to an encoding bit rate that is supported by the terminals, and said multiplex table is specified from the encoding bit rate after conversion.

6. A protocol conversion method according to any one of claims 1 to 5, wherein said multiplex table is used to multiplex into frames image data of packets of images and speech data of packets of speech received from said packet-switching network.

7. A protocol conversion method according to any one of claims 1 to 6, wherein, if there are no speech data to be multiplexed in frames at the timing of generating frames, speech data of silence are multiplexed in the frames.

8. A protocol conversion method according to any one of claims 1 to 7, wherein:
the content of frames received from said circuit-switching network is analyzed and the multiplex table used in multiplexing of the frames is specified;
data multiplexed in the frames are separated based on the multiplex table; and
said data that have been separated are packetized and transmitted to said packet-switching network.

9. A protocol conversion method according to claim 8, wherein:
speech data among said data that have been separated from said frames are analyzed and the encoding bit rate used in encoding said speech data specified; and
if the encoding bit rate that was specified is not supported in terminals on said packet-switching network side, packetizing is carried out following conversion to an encoding bit rate that is supported by the terminals.

10. A protocol conversion method according to claim 9, wherein speech data among said data that have been separated from said frames are analyzed and said encoding bit rate is specified from the data length of the speech data.

11. A protocol conversion method according to claim 9, wherein speech data among said data that have been separated from said frames are analyzed, and said encoding bit rate is specified from encoding bit rate information contained in the speech data.

12. A protocol conversion method according to any one claims 8 to 11, wherein, if speech data are not multiplexed in frames received from said circuit-switching network, speech data of silence are packetized to transmit to said packet-switching network.

13. A protocol conversion device in media communication by way of a packet-switching network and a circuit-switching network for converting protocols between said packet-switching network and said circuit-switching network, said protocol conversion device comprising:
a call connection unit for implementing call connection processes of said media communication between a terminal on said packet-switching network side and a terminal on said circuit-switching network side; and
a protocol converter for analyzing packets of speech received from said packet-switching network to specify the encoding bit rate of speech data in the speech packets, specifying a multiplex table used in multiplexing frames on said circuit-switching network from the encoding bit rate, and
using said multiplex table that was specified to multiplex data in the payload of packets received from said packet-switching network to generate frames and transmit to said circuit-switching network.

14. A protocol conversion device according to claim 13, wherein said protocol converter specifies the encoding bit rate of said speech data from the payload length of said packets of speech received from said packet-switching network.

15. A protocol conversion device according to claim 14, wherein, if the payload length of said packets of speech received from said packet-switching network is an integer multiple of the frame length of speech encoded frames of any encoding bit rate, said protocol converter determines that the encoding bit rate is an encoding bit rate of speech data in said speech packets.

16. A protocol conversion device according to claim 13, wherein said protocol converter specifies the encoding bit rate of said speech data from bit rate information contained in encoded data in the payload of said packets of speech received from said packet-switching network.

17. A protocol conversion device according to any one of claims 13 to 16, wherein, when an encoding bit rate that is not supported in terminals of said circuit-switching network side is allowed in terminals of said packet-switching network side, if the encoding bit rate of said speech data that has been specified by analyzing the content of packets of speech received from said packet-switching network is not supported in terminals of said circuit-switching network side, said protocol converter implements conversion to an encoding bit rate that is supported in the terminals and specifies said multiplex table from the encoding bit rate after conversion.

18. A protocol conversion device according to any one of claims 13 to 17, wherein said protocol converter uses said multiplex table to multiplex into frames speech data of packets of speech and image data of packets of images received from said packet-switching network.

19. A protocol conversion device according to any one of claims 13 to 18, wherein, if there are no speech data to be multiplexed into frames at the timing of generating frames, said protocol converter multiplexes speech data of silence in the frames.

20. A protocol conversion device according to any one of claims 13 to 19, wherein said protocol converter analyzes content of frames received from said circuit-switching network to specify a multiplex table that was used in multiplexing the frames, separates multiplexed data into the frames based on the multiplex table, and packetizes said data that have been separated to transmit to said packet-switching network.

21. A protocol conversion device according to claim 20, wherein said protocol converter analyzes speech data among said data that have been separated from said frames, specifies the encoding bit rate used in encoding of the speech data, and if the encoding bit rate is not supported in terminals of said packet-switching network side, packetizes after converting to an encoding bit rate that is supported in the terminals.

22. A protocol conversion device according to claim 21, wherein said protocol converter analyzes speech data among said data that have been separated from said frames, and specifies said encoding bit rate from the data length of the speech data.

23. A protocol conversion device according to claim 21, wherein speech data among said data that have been separated from said frames are analyzed and said encoding bit rate is specified from encoding bit rate information contained in the speech data.

24. A protocol conversion device according to any one of claims 20 to 23, wherein, if speech data are not multiplexed in frames received from said circuit-switching network, speech data of silence are packetized to transmit to said packet-switching network.

25. A protocol conversion program for, in media communication by way of a packet-switching network and a circuit-switching network, causing a computer to execute processes for converting protocols between said packet-switching network and said circuit-switching network, said program causing a computer to execute steps of:
analyzing packets of speech received from said packet-switching network to specify the encoding bit rate of speech data in the speech packets;
specifying a multiplex table used in multiplexing frames on said circuit-switching network from said encoding bit rate;
using said multiplex table that was specified to multiplex data in the payload of packets received from said packet-switching network to generate frames; and
transmitting said frames that have been generated to said circuit-switching network.
